# EUROPEAN PATENT APPLICATION

(11) **EP 4 191 612 A1**
(43) Date of publication of application: **07.06.2023**
(21) Application number: 21848985.4
(22) Date of filing: 27.07.2021
(51) Int. Cl.: G21F 1/04, G21F 3/00

(54) **RADIATION SHIELDING BODY, METHOD FOR MANUFACTURING RADIATION SHIELDING BODY, AND RADIATION SHIELDING STRUCTURE**

(30) Priority: 27.07.2020 JP 2020126588
(71) Applicant: KABUSHIKI KAISHA TOSHIBA, Minato-ku Tokyo 105-0023 (JP); Toshiba Materials Co., Ltd., Isogo-Ku Yokohama-Shi Kanagawa 235-0032 (JP)
(72) Inventor: FUKUTA, Yukihiro, Yokohama-shi, Kanagawa 235-0032 (JP); ISHII, Tsutomu, Yokohama-shi, Kanagawa 235-0032 (JP); NITTOH, Koichi, Tokyo 105-0014 (JP); UEMATSU, Mikio, Tokyo 105-0014 (JP)
(74) Representative: Hoffmann Eitle
(86) International application number: PCT/JP2021/027681
(87) International publication number: WO 2022/025036

(57) **Abstract**

A radiation shield unit, which shields against neutron rays, X-rays, and γ-rays, contains 10 vol% or more and 90 vol% or less of gadolinium.

## Description

### FIELD

Embodiments relate to a radiation shield unit, a method of manufacturing the radiation shield unit, and a radiation shield structure.

### BACKGROUND

Examples of materials for radiation shields include substances that scatter or absorb the radiation to attenuate a dose of the transmitting radiation in response to the materials receiving the radiation. The radiation is a general term for α-rays, β-rays, γ-rays, X-rays, neutron rays, and the like. Among them, the neutron rays react with the substances to emit α-rays, β-rays, γ-rays, and X-rays directly or secondarily. Therefore, in order to shield against the neutron rays, it is necessary to consider shielding against not only the neutrons but also the α-rays, the β-rays, the γ-rays, and the X-rays. The interaction between these radiations and substances also varies depending on the type of radiation or the magnitude of energy. Among them, the γ-rays, the X-rays, and the neutron rays have a high property of passing through the substances, so that research and development are being conducted on the substances that shield against them.

### RELEVANT REFERENCES

### Patent Reference

Reference 1: JP-A 06-128447

### Non- Patent Reference

Reference 2: OKADA, Kiyoshi, "Cement and Concrete as Construction Materials for Shielding," Material Testing, The Japan Society for Testing Materials, December 1956, Vol. 5, No. 39, p. 743 - 748

### SUMMARY

A radiation shield unit in an embodiment contains 10 vol% or more and 90 vol% or less of gadolinium.

### BRIEF DESCRIPTION OF THE DRAWINGS

FIG. 1 is a cross-sectional view schematically illustrating a configuration of a radiation shielding concrete 1.
FIG. 2 is a view illustrating a large-size coarse aggregate 5.
FIG. 3 is a view illustrating a medium-size coarse aggregate 6 and a large-size fine aggregate 7.
FIG. 4 is a view illustrating a small-size fine aggregate 8.
FIG. 5 is a view illustrating the relationship between neutron energy and a reaction cross section in an isotope of boron.
FIG. 6 is a view illustrating the relationship between neutron energy and a reaction cross section in the isotope of boron.
FIG. 7 is a view illustrating the relationship between neutron energy and a reaction cross section in an isotope of boron.
FIG. 8 is a view illustrating the relationship between neutron energy and a reaction cross section in the isotope of boron.
FIG. 9 is a view illustrating the relationship between neutron energy and a reaction cross section in an isotope of gadolinium.
FIG. 10 is a view illustrating the relationship between neutron energy and a reaction cross section in an isotope of gadolinium.
FIG. 11 is a view illustrating the relationship between neutron energy and a reaction cross section in an isotope of gadolinium.
FIG. 12 is a view illustrating the relationship between neutron energy and a reaction cross section in an isotope of gadolinium.
FIG. 13 is a view illustrating the relationship between neutron energy and a reaction cross section in an isotope of gadolinium.
FIG. 14 is a view illustrating the relationship between neutron energy and a reaction cross section in an isotope of gadolinium.
FIG. 15 is a view illustrating a comparison of thermal neutron transmission between a boron compound and a gadolinium compound.
FIG. 16 is a schematic view for explaining neutron capture γ-rays of gadolinium.
FIG. 17 is a schematic view for explaining neutron capture γ-rays of gadolinium.
FIG. 18 is a view illustrating γ-ray energy and a transmission ratio of a shielding material having a thickness of 5 cm.
FIG. 19 is a schematic top view illustrating a structure example of a concrete block 10.
FIG. 20 is a schematic front view illustrating another structure example of the concrete block 10.
FIG. 21 is a schematic side view illustrating another structure example of the concrete block 10.
FIG. 22 is a schematic view illustrating a structure example of a concrete block structure.
FIG. 23 is a schematic view illustrating a structure example of the concrete block structure.

### DETAILED DESCRIPTION

Hereinafter, there will be explained an embodiment of the present invention in detail. Incidentally, the configuration to be described below is an example and does not limit the scope of the present invention. Further, in the explanation of the drawings, the same components are denoted by the same reference numerals, and their overlapping explanations are omitted as appropriate. Further, in the following explanation, in the drawings to be referred to, the size and thickness of each component member are values for convenience of explanation, and do not necessarily indicate actual dimensions or ratios.

One embodiment relates to a radiation shield unit that shields against radiation and a manufacturing method thereof, and more particularly to a radiation shielding concrete against radiations generated from nuclear reactors or accelerators, radioisotope sources, and radioactive wastes, particularly, neutrons and secondary γ-rays and X-rays generated by reactions with the neutrons and a method of manufacturing the radiation shielding concrete.

The X-ray and the γ-ray are called differently depending on how they are generated (in the description hereinafter, the X-ray and the γ-ray will be collectively described as the γ-ray), but their reactions with substances depend on the magnitude of an atomic number Z, and in the case of γ-rays with the same energy, as the atomic number Z and a density become larger, a reaction cross section is increased and a shielding ability is enhanced. Therefore, as the shielding material against the γ-rays, tungsten, bismuth, lead, and molybdenum are used rather than carbon and aluminum being light elements. In the case of X-rays and γ-rays, elements with the atomic numbers Z close to each other have almost the same transmission (shielding effect) as long as their densities are almost the same. Further, the X-rays differ in the transmission amount depending on the energy at an absorption edge different according to the orbital of an electron shell of an atom, such as a K shell or an L shell, but there is no distinction between isotopes. Further, as the energy of the X-rays or γ-rays becomes higher, the transmission becomes higher (shielding effect deteriorates).

On the other hand, the neutron rays are not related to the atomic number Z in particular, and differ in the reaction rate depending on the isotope of a specific element. Therefore, even with the same elements, due to the difference in isotope or neutron energy, the rate of reaction or absorption varies and the rate of transmission (shielding effect) of the neutron rays differs. Regarding this reaction rate, a neutron cross section (unit: barn (b), 1 b = 10 ^{- 24} cm²) is used as an indicator indicating the interaction between a neutron and a substance. The value defined by multiplying the neutron cross section by an atomic number density ρ is called a macroscopic cross section Σ (cm^{- 1}) and corresponds to a linear attenuation coefficient of X-rays.

The above elements are, for example, hydrogen, lithium, boron, and so on, which have a low rate of reaction with γ-rays. In the case of lithium, lithium 6 (Li-6), which is an isotope with a natural abundance of 7.6%, reacts, in the case of boron, boron 10 (B-10), which is an isotope with a natural abundance of 20%, reacts, and Lithium 7 (Li-7) with a natural abundance of 92.4% and boron 11 (B-11) with a natural abundance of 80% hardly react with neutrons. Lithium and boron compounds are mainly used as the shielding material for neutrons. The γ-rays depend on the magnitude of the atomic number Z, but do not particularly depend on the abundance of isotopes. Therefore, in order to increase the rate of reaction with neutrons, there is sometimes a case that the ratio of isotopes to react is enriched to be used, such as the case where an isotope B-10 is enriched by 90% or more from natural boron to be used.

In both the cases of γ-rays and neutrons, in general, as the energy of radiation becomes higher, the reaction rate becomes lower and the shielding ability also becomes smaller, except for the case of performing resonance absorption that is unique to neutron isotopes. Therefore, in order to shield against high-energy radiations, it is necessary to increase the thickness of the shield.

As the shield that has been put into practical use, in addition to the cement and the concrete, a shield is sometimes formed of resin or rubber containing a material that reacts with radiations. The fact that the concrete is advantageous as a material for shielding is because it is excellent in structural strength, shielding ability, workability, and adaptability. On the other hand, the disadvantage of the concrete is that the shield is thick as compared to denser materials. To compensate for this disadvantage, various types of heavy concretes and special cements were studied in 1956.

The concrete consists of cement, water, a coarse aggregate, a fine aggregate, and an admixture. The coarse aggregate accounts for the largest proportion by volume, followed by the fine aggregate. The cement, the water, and the admixture enter gaps between them. The coarse aggregate and the fine aggregate commonly used are gravel and sand, but their chemical compositions differ depending on where they are collected, and they are oxides such as aluminum and calcium and rock minerals such as silicates and carbonates. The sand also includes river sand and sea sand, and although they differ in salinity, they are basically formed by weathering of rocks, to thereby make particles smaller. As the cement, portland cement, alumina cement, and so on are known. These cements have properties that they are hardened by a chemical reaction with water and their strength does not decrease even in water after hardening.

The heavy concrete is used for radiation shielding. As described above, the larger the atomic number Z and the higher the density, the higher the effect of shielding against the γ-rays, so that for the coarse aggregate and the fine aggregate, there are used limonite ore (2Fe₂O₃·3H₂O) having a high iron composition ratio and having a density of 3 to 4 g/cm³, magnetic iron ore (Fe₃O₄) having a density of 4.6 to 5.1 g/cm³, barite (BaSO₄) having a density of 4.2 to 4.4 g/cm³, and galena (PbS) having a higher density of 7.5 g/cm³, and an iron ingot, an iron piece, a steel ball, and so on having a density of 7.6 to 7.8 g/cm³ are also used. The effect of shielding against the γ-rays exhibited by the aggregates using these materials is higher than that exhibited by a general lightweight aggregate, but the effect of shielding against thermal neutrons is low. As the aggregate for absorbing thermal neutrons, there can be cited colmanite (also known as colemanite) (B₂O₃) having a density of 2.42 g/cm³, danburite (B₂O₃) having a density of 2.9 g/cm³, Pyrex (registered trademark) (B₂O₃) having a density of 2.25 g/cm³, and boron carbide (B₄C) having a density of 2.5 g/cm³. The aggregates using these materials are lightweight aggregates, and when they are solely used, the shielding efficiency of the γ-rays deteriorates, so that they are mixed with heavyweight aggregates. Consequently, the ratio of isotopes, which are present in the entire volume and react with the neutrons, is further reduced, resulting in that the thickness of the shield has to be increased.

The radiation shielding concrete is required to be able to not only shield against the α-rays, the β-rays, the γ-rays, and the X-rays, but also shield against the neutron rays. In addition, unlike ordinary concrete structures, the radiation shielding concrete is irradiated with radiations, so that the soundness of radiation deterioration has to be considered. When the concrete is irradiated with high doses of radiation, the energy of the radiation is absorbed to the concrete to generate heat. This causes repeated expansion and contraction in the aggregates and a cement paste, resulting in that embrittlement or cracking occurs. Further, radiolysis occurs, and in the resin containing water or hydrogen, in particular, chemical bonds are broken, hydrogen gas is generated, and liberation occurs to cause embrittlement. When ionization occurs due to radiation, chemical reactions with other substances occur at the molecular level, leading to deterioration.

In the case of neutrons, in particular, a change to another nuclide is caused in some cases. For example, regarding boron that is often used as a neutron absorber, when B-10 being an isotope reacts with neutrons, it emits α-rays to be Li-7 being an isotope of lithium, and prompt γ-rays of 478 keV are emitted from Li-7. Further, in the case of neutrons, levels at which the energy is handled differ, ranging from thermal neutrons (in the vicinity of 0.025 eV) from a nuclear reactor that is set as a neutron source, to high-energy neutrons from an accelerator neutron source, a radioisotope (RI) neutron source, and the sun in a space environment. When the energy becomes high, shielding becomes difficult even with lithium or boron, to thus require such a scheme as to mix with a moderator of the neutron to lower the energy and then perform shielding because how they react also differs. For shielding against the γ-rays, a radiation shielding concrete mainly using a heavyweight aggregate may be used, but in order to shield against the neutrons as well, an optimum combination with a conventional lightweight aggregate containing lithium or boron, is required.

The scattering of neutrons has two characteristics roughly: coherent scattering; and incoherent scattering. The coherent scattering is dominant for many elements. Elements with a large coherent cross section are mainly scattered by diffraction, and Bragg edges appear due to the difference in neutron energy. The incoherent scattering is scattering with atomic motion, and the cross section increases in inverse proportion to a neutron velocity v, which is equivalent to the neutron energy. This is known as the " 1/v law," and elements such as B-10 and Li-6, for example, correspond to the 1/v law, and when the energy becomes high (velocity v is accelerated), the elements do not easily react and the shielding efficiency decreases. In addition to these scattering cross sections, there are absorption cross sections due to resonance capture that appear in a neutron energy region that differs depending on the isotope of an element.

In general, the neutron rays output from a neutron source contain neutrons of various energies, and at energies lower than 1 MeV, reactions in a resonance region such as the 1/v law and resonance absorption occur (the reaction in which γ-rays are emitted in reaction with neutrons mainly, this reaction is referred to as (n, y) reaction below), but at 1 MeV or more, threshold reactions different from these reactions (such as (n, 2n) reaction, in which two neutrons are emitted in reaction with one neutron, (n, p) reaction, in which a proton is emitted in reaction with neutrons, and (n, α) reaction, in which α-rays are emitted in reaction with neutrons) occur. In particular, unlike the reaction with the γ-rays, the reaction with the neutrons sometimes causes changes in elements such as the change of boron to lithium or the change of sulfur to phosphorus, and the change of an element that was not originally a radioactive substance to a radioactive substance. The time index until the rate at which the element becomes a radioactive substance and emits radiation is halved due to disintegration is indicated by a half-life. If the half-life is on the millisecond timescale or nanosecond timescale, it will not be a problem because the element no longer becomes radioactive almost instantaneously, but in the case where the element is irradiated at high doses to be a substance with a long half-life, the shield itself becomes an emission source of radiation for a long period of time and does not fulfill its role as a shield.

The neutron reactant of colmanite (also known as colemanite) (B₂O₃), danburite (B₂O₃), Pyrex (registered trademark) (B₂O₃), and boron carbide (B₄C), which are used as a neutron shielding material, is boron. Natural boron includes isotopes of boron 10 (B-10) with a natural abundance of 19.9% and boron 11 (B-11) with a natural abundance of 80.1%. The nuclear data JENDL-4.0, which indicate the reaction rate with neutron energy (cross section: Cross Section, unit: barns), are available on the homepage of each data research group of Japan Atomic Energy Agency (https://wwwndc.jaea.go.jp/jendl/j40/J40_J.html#Reports). (References: K. Shibata, O. Iwamoto, T. Nakagawa, N. Iwamoto, A. Ichihara, S. Kunieda, S. Chiba, K. Furutaka, N. Otuka, T. Ohsawa, T. Murata, H. Matsunobu, A. Zukeran, S. Kamada, and J. Katakura: "JENDL-4.0: ANew Library for Nuclear Science and Engineering," J. Nucl. Sci. Technol. 48(1), 1-30 (2011).)

In a thermal neutron region, the reaction cross section of B-10 is about six orders of magnitude larger than that of B-11. However, in a high energy region exceeding 1 MeV, the reaction cross section of B-10 is almost the same as that of B-11. B-10 reacts with neutrons to emit α-rays to be Li-7. This reaction is more accurately described as ¹⁰B(n,α)^{7∗}Li reaction. ^{7∗}Li is endowed with an initial recoil energy of 840 keV by the (n, α) reaction, and emits prompt γ-rays of 478 keV while moving with a short lifetime of 0.105 ps to be Li-7 in the ground state. Therefore, when natural minerals or other materials are used in terms of radiation shielding, the shielding efficiency is determined by the number of boron atoms present in the natural mineral, the cross section depending on the isotopic ratio of B-10 having a high reaction rate with neutrons and the neutron energy, and the product of these. In addition, when the energy of neutrons is high, the cross section becomes small, and thus, it is important to reduce the energy by the number of collisions with neutrons using a moderator such as hydrogen or carbon to cause high-energy neutrons to react more efficiently. Furthermore, the prompt γ-rays of 478 keV are emitted, and thus, shielding against these γ-rays also has to be considered. The density of a boron-containing mineral is about 2.5 g/cm³, which is about 1/3 that of an iron-containing mineral, and the atomic number Z is also small as Z = 5, and thus, a mass attenuation coefficient µ/ρ (µ: linear absorption coefficient, ρ: density of substance), which is important in the interaction with X-rays or γ-rays, is generally said to be proportional to the third to fourth power of Z. Therefore, the shielding effect against γ-rays decreases.

In one embodiment, we focus on gadolinium (Gd), which has the largest reaction cross section for thermal neutrons among the elements, and focus on the point that the shielding effect against γ-rays also increases because of the atomic number Z = 64. Gadolinium being a rare-earth element is rare earth and rare metal. Regarding the isotopes of gadolinium that are present in the nature, there are six types of Gadolinium 154 (Gd-154) with a natural abundance of 2.18%, Gadolinium 155 (Gd-155) with a natural abundance of 14.80%, Gadolinium 156 (Gd-156) with a natural abundance of 20.47%, Gadolinium 157 (Gd-157) with a natural abundance of 15.65%, Gadolinium 158 (Gd-158) with a natural abundance of 24.84%, and gadolinium 160 (Gd-160) with a natural abundance of 21.86%. In the thermal neutron region, where the energy of neutrons is 0.0253 eV, the reaction cross section of Gd-157 is 66 times larger than that of B-10, and the reaction cross section of Gd-155 is 15.8 times larger than that of B-10. In the region where the energy is around 100 eV to 1 keV, Gd-157 and Gd-155 each have a plurality of resonance absorption peaks and have a larger reaction cross section than B-10, like the other isotopes of Gd.

The main reaction of gadolinium, unlike boron, is the (n, y) reaction in which it reacts with neutrons to emit γ-rays (data described as capture in the drawing illustrating the cross section). In the case of boron, ^{7∗}Li is produced by the (n, α) reaction, and prompt γ-rays of 478 keV are emitted in the process of becoming Li-7, but in the case of Gd, Gd-155, Gd-156, Gd-157, and Gd-158, which are produced by the ¹⁵⁴Gd(n,γ)¹⁵⁵Gd reaction, the ¹⁵⁵Gd(n,γ)¹⁵⁶Gd reaction, the ¹⁵⁶Gd(n,γ)¹⁵⁷Gd reaction, and the ¹⁵⁷Gd(n,γ)¹⁵⁸Gd reaction, respectively, are stable isotopes and do not emit β-rays or γ-rays with disintegration. Gadolinium 159 (Gd-159) produced by the ¹⁵⁸Gd(n,γ)¹⁵⁹Gd reaction becomes terbium (Tb-159), which is a stable isotope, with β disintegration. By this disintegration, β-ray energies of 970.6 keV (62%), 912.6 keV (26%), 607.09 keV (12%), and 622.42 keV (0.31%) are emitted, and γ-ray energies of 363.55 keV (11.4%), 58 keV (2.15%), 348.16 keV (0.234%), and 226.01 keV (0.215%) are emitted. In particular, Gd-157 and Gd-155, which have a large reaction cross section in the thermal neutron region, emit neutron capture γ-rays of 8 MeV by the (n, y) reaction.

The mode of this γ-ray emission is roughly classified into two: (1) continuous spectrum (93.8%); and (2) discrete spectrum (6.2%). (1) Continuous spectrum accounts for most of the emission mode, in which over high to low energies instead of a single energy of 8 MeV from an unstable compound nucleus to a stable ground level, the emission ratio is high. In (2) discrete spectrum, the energies are 5.62 MeV + 2.25 MeV (1.3%), 5.88 MeV + 1.99 MeV (1.6%), 6.74 MeV + 1.11 MeV (3.2%), and 7.87 MeV (0.02%). The energy in the discrete spectrum is high, but the ratio of the energy is low.

In radiation shielding techniques, the purpose of shielding is preferably set to prevent radiation from damaging people and devices such as a detector. High-energy γ-rays that pass through substances with a large atomic number Z pass through human tissues composed of light elements and thin-film detector elements. That is, if the amount of linear energy transfer (LET: Linear Energy Transfer) by radiation in a substance to be protected is small, less energy is given to the substance through which the γ-rays pass, causing no damage. The LET represents how much energy is given to the substance while radiation passing through the substance. Conversely, as the LET becomes larger, more energy is given to the substance, which inevitably leads to greater damage to human cells and tissues. This is expressed that relative biological effectiveness (RBE: Relative Biological Effectiveness) increases, and the greater the LET, the greater the RBE.

Depending on the degree of damage, considering the purpose of protection by such shielding, in the case of high-energy γ-rays, the purpose of shielding can be achieved even if the γ-rays pass through the γ-ray shielding material. For example, even if γ-rays of 2 MeV and 500 keV have monochromatic energy (strictly speaking, having a range of energy) at the time of generation, their energy attenuates by the photoelectric effect, Compton scattering, or the like from the interaction between the γ-rays and the substance and the γ-rays spread to a lower energy region. In the lower energy region, in particular, the γ-rays of 500 KeV react and attenuate more than the γ-rays of 2 MeV as the γ-ray shielding material. Then, as the energy of γ-rays of several hundred keV or less is lower, the LET and the RBE for the human body and devices such as sensors become larger.

Further, an attenuation factor is calculated specifically. When γ-rays with energies of 50 keV, 100 keV, 500 keV, and 2 MeV are each blocked by a shielding material containing iron, lead, boron carbide, and gadolinium oxide, with a thickness of 5 cm and a uniform density, at 2 MeV, boron carbide attenuates to 60%, iron and gadolinium oxide attenuate to 20%, and lead attenuates to 10% or less. At 500 keV, boron carbide is about 35%, while iron, lead, and gadolinium oxide are less than 0.50% (1/20). At an even lower energy of 100 keV, boron carbide does not attenuate to 10% or less, but iron becomes equal to or less than the - 7th power of 4 × 10 (4 × 10 ^{- 7}), gadolinium oxide becomes equal to or less than - 42nd power of 1 × 10 (1 × 10 ^{- 42}), and lead becomes equal to or less than - 137th power of 2 × 10 (2 × 10 ^{- 137}). Further, as the energy becomes lower, they more attenuate. Since the actual concrete shield consists of cement, water, a coarse aggregate, a fine aggregate, and an admixture, it is difficult to form it with a uniform density. Even if iron ingots are used for the coarse aggregate, the density will be low in the fine aggregate or a cement paste portion of the cement, the water, and the admixture.

Thus, the concrete, which shields against neutrons and further shields against γ-rays, has a low ability to shield against the γ-rays only with a neutron absorbing material containing boron as an aggregate, but conversely, the heavy concrete containing high-density iron or the like as an aggregate has low performance to shield against the neutrons, so that both are used together.

Therefore, in the embodiment, concrete is used as the radiation shield unit, and a gadolinium compound is used for the aggregates (coarse aggregate and fine aggregate) forming the concrete. In particular, in order to form a coarse aggregate or fine aggregate having a large particle size, it is preferable to use a material that has been made ceramic by performing a Hot Isostatic Pressing: (HIP) treatment. Therefore, the density of the aggregate is 6.5 g/cm³ or more. A general mixture of concrete consists of cement, a fine aggregate (sand), and a coarse aggregate (gravel) with a volume ratio of 1: 2 to 3: 4 to 6 when the cement is set as 1. The fine aggregate and the cement paste (cement and water) enter gaps of the coarse aggregate in an actual manufacturing situation, and thus, the ratio of the cement paste and the fine aggregate to the coarse aggregate is adjusted. Therefore, the volume ratio of the fine aggregate to the cement is preferably 2 or more and 3 or less. The volume ratio of the coarse aggregate to the cement is preferably 4 or more and 6 or less. The radiation shield unit in the embodiment may be so-called mortar.

The volume ratio of the water to the cement is preferably 0.5 or more and 0.6 or less. As for the amount of water, the ratio of the water to the cement is 50 to 60% as a standard. That is, when the volume of a concrete product is 100%, the ratio of the aggregate, which is the sum of the fine aggregate and the coarse aggregate, is 85 to 90% and the ratio of the water is about 5%. Therefore, the high-density aggregate becomes a material that shields against neutrons and γ-rays, and further, neutrons with higher energy are scattered by the water and moderated to be absorbed by the aggregate. In addition, this aggregate in particular can be manufactured using waste materials that have already been HIP-treated from powder raw materials such as shaved pieces or shavings obtained when manufacturing scintillators to be used as a detector for X-rays or γ-rays without being HIP-treated, inspected defective products of the produced scintillators, or materials to be replaced and discarded due to the end of product life, and thus not only is it less expensive as compared to the case where the aggregate is formed from a raw material powder, but it is also effective to dispose of environmental waste.

The concrete, which is the radiation shield unit in the embodiment, contains 10 vol% or more and 90 vol% or less of a gadolinium element relative to the concrete. When the content is less than 10 vol%, the effect of shielding against radiation is not sufficient, and even if the thickness of the concrete is increased, the concrete becomes too thick for obtaining effectiveness and becomes no longer practical. Further, when the content exceeds 90 vol%, the strength of the concrete decreases. The desirable content is 30 vol% or more and 70 vol% or less. The content of the gadolinium element contained in the concrete is measured as follows.

As a method of analyzing the composition of the radiation shield unit non-destructively and a method of measuring the containing gadolinium element, there can be cited a fluorescent X-ray analysis, which detects fluorescent X-rays peculiar to gadolinium generated by irradiating an object with X-rays. The composition and the element can be found easily and accurately by the fluorescent X-ray analysis. Further, it is possible to find the content ratio of gadolinium isotopes by using neutron rays to measure the atomic number density of gadolinium reacting in the radiation shield unit from the ratio of the intensity of neutrons irradiating the object and the intensity of neutrons transmitted through the thickness of the object. As a method of analyzing the ratio of isotopes in more detail, the transmission amount of resonance absorption energy peculiar to the gadolinium isotopes can also be found by a time-of-flight method using neutrons.

The gadolinium compound has a density of 6.5 g/cm³ or more, for example, and is formed of heavy concrete using a water-insoluble ceramic or sintered compact as the coarse aggregate and the fine aggregate. For example, there can be cited gadolinium oxide having a density of 7.4 g/cm³ (Gd₂O₃: hereinafter abbreviated as GO), gadolinium gallium garnet having a density of 7.09 g/cm³ (Gd₃Ga₅O₁₂: hereinafter abbreviated as GGG), gadolinium oxysulfide having a density of 7.3 g/cm³ (Gd₂O₂S: hereinafter abbreviated as GOS), and gadolinium silicate having a density of 6.7 g/cm³ (Gd₂SiO₅: hereinafter abbreviated as GSO). Further, phosphor materials obtained by mixing praseodymium, terbium, europium, cerium, and so on with these as a base material are also included. Incidentally, aspects in which arbitrary combinations of the above components and the components and expressions of the embodiment are replaced with each other between methods, devices, systems, or the like are also effective as an aspect of the present invention.

The radiation shield unit in the embodiment may further contain at least one selected from the group consisting of tungsten (W), bismuth (Bi), lead (Pb), molybdenum (Mo), and a heavy alloy (Heavy Alloy). The heavy alloy is a sintered compact of a tungsten-base alloy containing tungsten as a main component and elements such as nickel, copper, and iron, and has a high density and high radiation shielding properties. Since these elements or materials shield against γ-rays, they are contained in the radiation shield unit together with gadolinium, which shields against neutron rays, thereby making it possible to enhance the shielding effect against the radiations including γ-rays and neutron rays.

In the method of manufacturing the concrete being the radiation shield unit in the embodiment, a powdered aggregate having an average particle size, an average length, or an average thickness of less than 5 mm is used as it is as the fine aggregate, and a ceramic or sintered compact having an average particle size, an average length, or an average thickness of 5 mm or more is used as it is as the coarse aggregate, or is crushed to be less than 5 mm and used as the fine aggregate. Conversely, it is possible that in the case of a powder having an average particle size, an average length, or an average thickness of less than 5 mm, the powder is HIP-treated to fabricate a ceramic or sintered compact, and the ceramic or sintered compact is crushed or cut to fabricate a coarse aggregate having an average particle size, an average length, or an average thickness of 5 mm or more and the coarse aggregate can be used. The gadolinium compound used here is used as a product such as a phosphor for X-rays or γ-rays, a sensor for detectors, or an intensifying screen. As above, for the gadolinium compound, wastes such as cutting chips or defective products generated during the manufacture, materials to be replaced because the products used cannot obtain a specific amount of luminescence or because they are scratched or damaged, or materials to be discarded as a result of the disposal of devices are collected to be used. For example, a sensor in which a plurality of thin columnar GOS scintillators are bundled as a scintillator for X-rays has a size of 5 mm or more, and thus it can be used as it is or can be crushed to be used, and as for sensors or intensifying screens to be used by mixing a binder with a GOS powder and applying the mixture to a resin surface, a glass surface, or the like, the paste-like GOS phosphor applied to the front surface or rear surface excluding the resin or glass can be peeled off and crushed for use. The gadolinium compounds contained in the fine aggregate and the coarse aggregate may be the same as or different from each other.

The gadolinium compound may contain an activator. Examples of the activator include rare-earth elements. As the example of the rare-earth element, praseodymium (Pr), terbium (Tb), europium (Eu), cerium (Ce), and so on are particularly preferable.

As described above, using a high-density gadolinium compound as the aggregate, it is possible to provide a radiation shield unit that is capable of scattering high-energy neutron rays with water mixed with cement to absorb the energy and reduce the energy to low energy. According to the radiation shield unit in the embodiment, it is possible to inexpensively provide shielding concrete against radiations containing neutron rays in an environmentally friendly manner. Therefore, it is possible to provide a radiation shield unit that is capable of efficiently shielding against not only γ-rays but also neutrons with a concrete thickness equal to or thinner than that of conventional γ-ray shielding concrete as inexpensively as possible, while reducing wastes.

Another embodiment is, for example, a nuclear reactor and an accelerator facility as s facility that generates neutrons and a facility intended for shielding, an RI neutron source facility, a nuclear fuel facility, a nuclear fuel storage facility, and a nuclear shelter, and is a heavy particle beam facility, a neutron capture therapy (BNCT) facility, and so on in the medical field. The radiation shield unit is widely applied for radiation shielding in X-ray and γ-ray facilities as well as in non-destructive inspection facilities such as medical X-ray facilities, airports, ports, and security-related facilities, or is widely applied in combination with building structural materials. In particular, the neutron rays can also be blocked while having a γ-ray shielding ability comparable to heavy concrete with a high weight density suitable for shielding against X-rays and γ-rays, so that in the facility related to neutrons, a facility with a high radiation shielding effect can be designed without separately preparing a γ-ray shielding material.

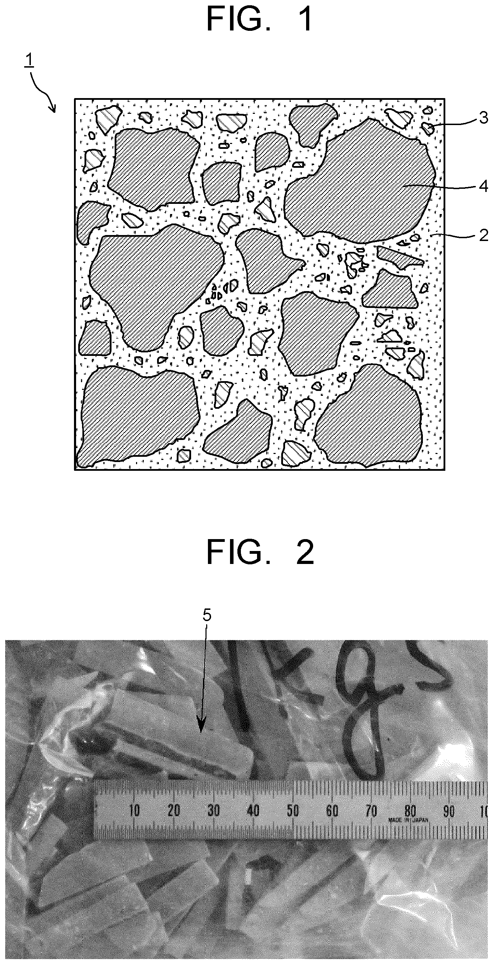

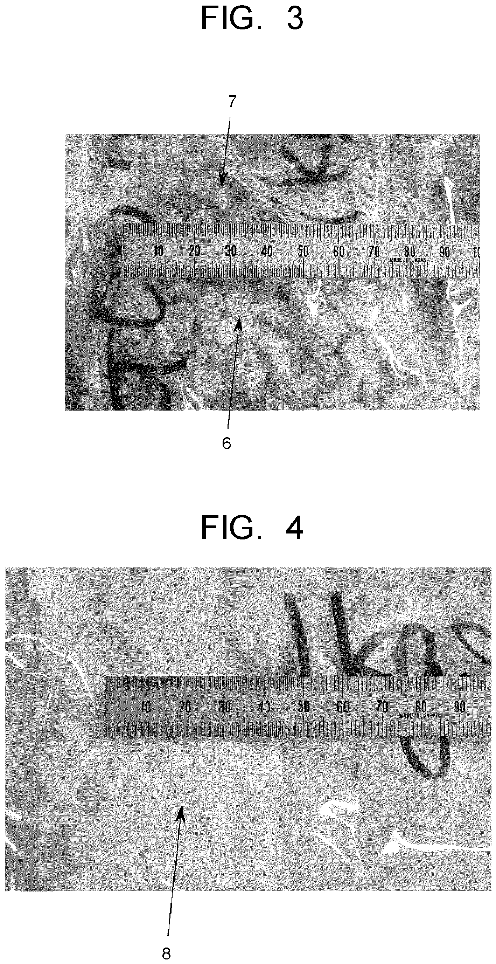

FIG. 1 is a cross-sectional view schematically illustrating a configuration of radiation shielding concrete 1. The radiation shielding concrete 1 includes cement 2, a fine aggregate 3, and a coarse aggregate 4. FIG. 2 illustrates a large-size coarse aggregate 5, which is a specific radiation shielding ceramic coarse aggregate used for the coarse aggregate 4 illustrated in FIG. 1. The large-size coarse aggregate 5 is a waste material formed by grinding a sintered compact when gadolinium oxysulfide (Gd₂O₂S) is HIP-treated to fabricate a scintillator material for X-rays or γ-rays. FIG. 3 illustrates a medium-size coarse aggregate 6, which is a radiation shielding ceramic coarse aggregate that is made of the same material as and has a size different from the large-size coarse aggregate 5, and further illustrates a large-size fine aggregate 7, which is a radiation shielding ceramic fine aggregate that is small as a coarse aggregate and is large as a fine aggregate.

FIG. 4 illustrates a small-size fine aggregate (powder) 8. The small-size fine aggregate 8 is a powder obtained by crushing the coarse aggregate or fine aggregate in FIG. 2 or FIG. 3 into a powder in a crusher such as a hammer, a roller mill, or a ball mill, or is a powder of a raw material. Gadolinium oxysulfide is used for the coarse aggregate and the fine aggregate, but using this as a base material, a phosphor containing praseodymium (Pr), terbium (Tb), or europium (Eu) may be used for the activator. Not only waste materials generated by cutting after a HIP treatment but also product defects and product wastes that have exceeded their product life can be used as the aggregates. In addition, waste materials generated in the manufacturing process of intensifying screens, in which a powder of gadolinium oxide or the like is mixed with a binder and the obtained mixture is uniformly coated on a resin material such as a polyethylene terephthalate (PET) resin, and product wastes that have exceeded their product life can be cut or crushed into aggregates. When mixed with a PET resin, in particular, the hydrogen component contained in the PET resin contributes to scattering of neutrons.

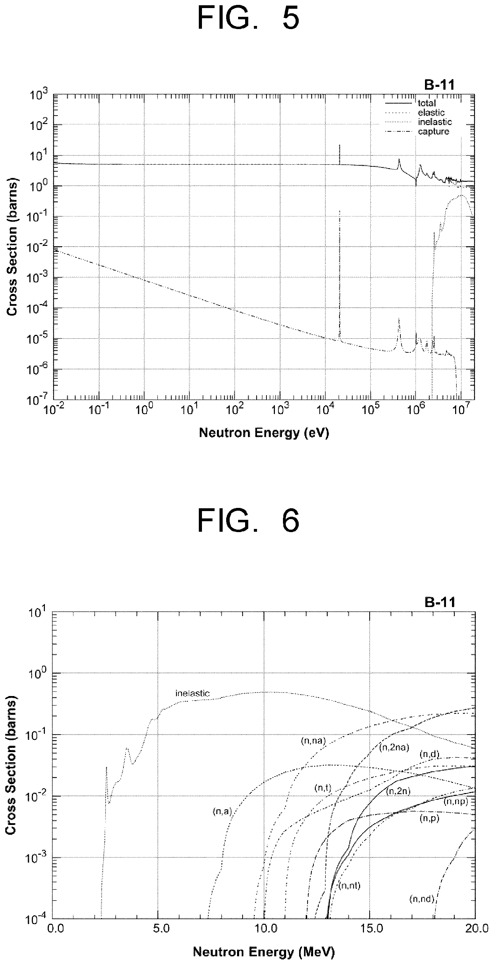

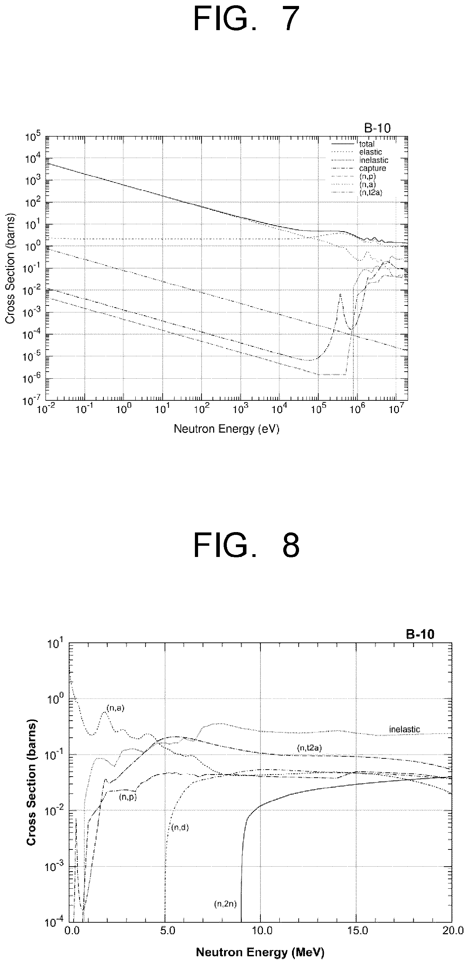

FIG. 5, FIG. 6, FIG. 7, and FIG. 8 each are a view illustrating the relationship between neutron energy and a reaction cross section in an isotope of boron. When boron is used for a neutron absorber, as illustrated in FIG. 5 to FIG. 8, natural boron B consists of isotopes of B-11 with an abundance of 80.1% and B-10 with an abundance of 19.9%. Of these, B-10 with a natural abundance of 19.9% is to react with neutrons. Depending on the state of constituent molecules of the aggregate, for example, in colemanite (B₂O₃), boron B is 2/5 of 2 out of 5 atoms and further, the natural abundance is 19.9%, and thus, the reaction with neutrons will be 8% and a cross section in which B-10 reacts with neutrons corresponding to this 8% is obtained.

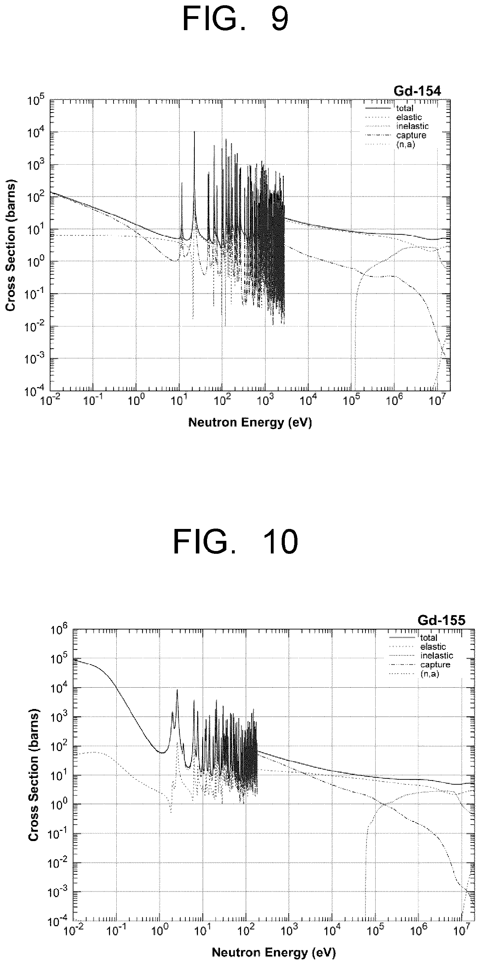

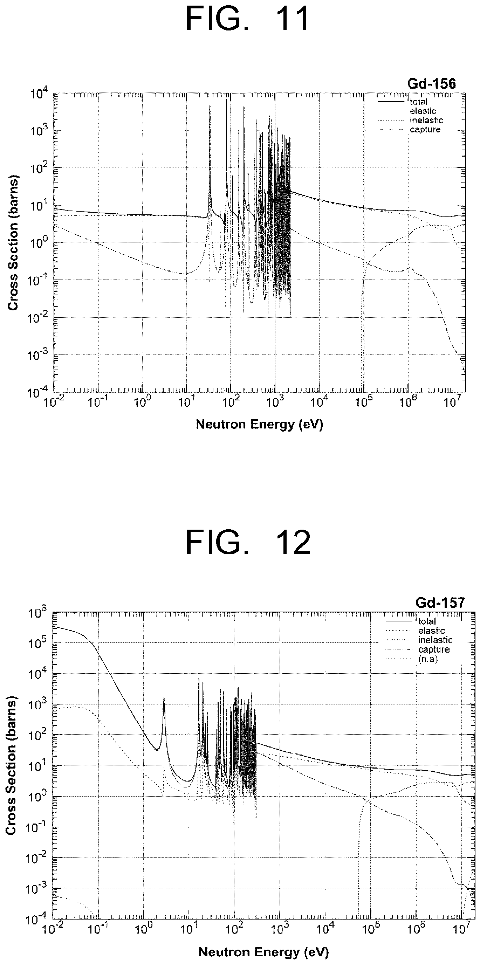

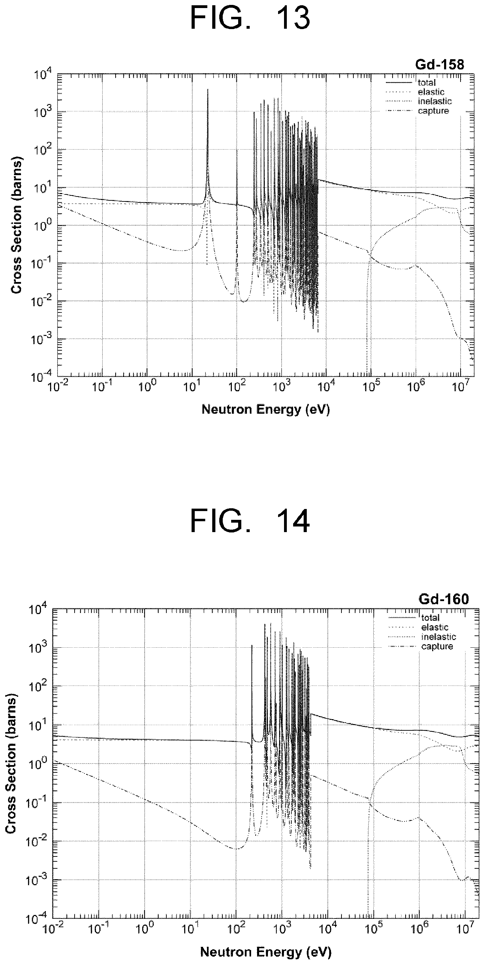

FIG. 9, FIG. 10, FIG. 11, FIG. 12, FIG. 13, and FIG. 14 each are a view illustrating the relationship between neutron energy and a reaction cross section in an isotope of gadolinium. Natural gadolinium Gd mainly consists of 6 isotopes, as illustrated in FIG 9 to FIG. 14. In the thermal neutron region with low neutron energy, in particular, Gd-155 (natural abundance of 14.8%) and Gd-157 (15.65%) with a reaction cross section 10 to 100 times larger than that of B-10 are 30% in total, which is larger than boron, and in the case of gadolinium oxysulfide (Gd₂O₂S), atoms of gadolinium are 2/5, the reaction with neutrons will be 13.3%, and the reaction rate with neutrons is high.

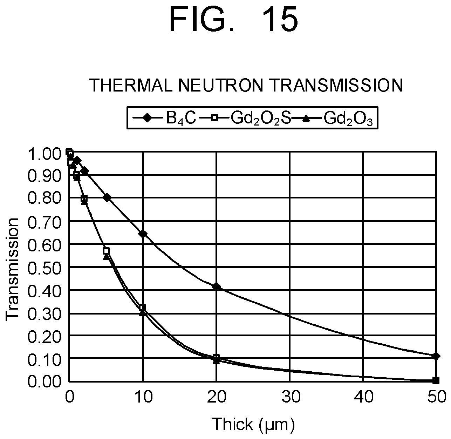

These isotopes of gadolinium, including other isotopes of gadolinium, have resonance absorption peaks present in a wide range ranging from several eV to several thousand eV, and there are many points where the reaction rate is large even in a high energy region. FIG. 15 illustrates results of a comparison of thermal neutron transmission between boron carbide (B₄C) of the boron compound and gadolinium oxysulfide (Gd₂O₂S) and gadolinium oxide (Gd₂O₃) of the gadolinium compound. FIG. 15 is a view illustrating analysis results of the neutron transmission for each thickness of the material. When the thickness is 20 µm, the thermal neutron transmission of boron carbide is about 0.40, but the thermal neutron transmission of the gadolinium compound attenuates to 0.10. This indicates that the gadolinium compound has a high thermal neutron shielding ability.

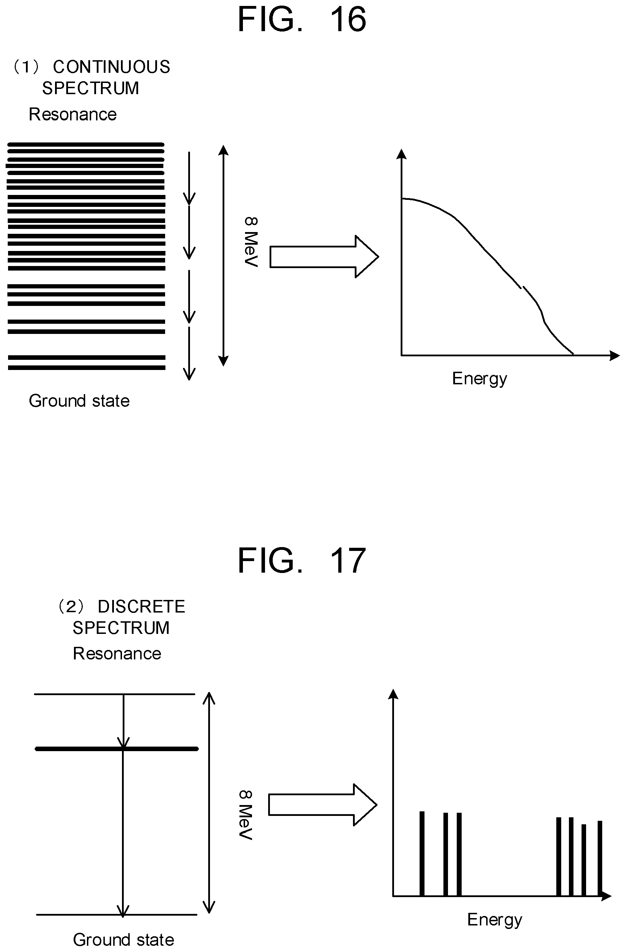

High-energy neutrons are moderated by a moderator (hydrogen) and absorbed in the thermal neutron region, enabling efficient shielding. Boron and gadolinium react with neutrons to emit γ-rays. Boron is 478 keV and gadolinium is up to 8 MeV FIG. 16 and FIG. 17 each are a schematic view for explaining neutron capture γ-rays of gadolinium. As illustrated in FIG. 16 and FIG. 17, the neutron capture γ-rays of gadolinium are divided into two types: (1) continuous spectrum and (2) discrete spectrum, and are mainly (1) continuous spectrum. In this case, the rate of emission in a lower energy region, including scattering or the like, becomes larger than the rate at which 8 MeV is actually emitted.

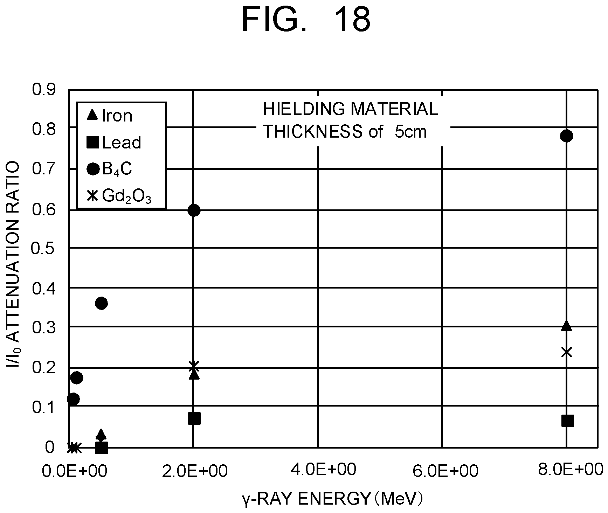

FIG. 18 illustrates results of calculation of γ-ray energy and an attenuation ratio when the thickness of the shielding material is set to 5 cm. At 8 MeV, only about 20% can be blocked by boron carbide, while 70% or more can be blocked by gadolinium oxide like iron (Iron). γ-rays of 2.2 MeV, which are emitted when neutrons react with hydrogen, can be blocked by about 40% by boron carbide, while in the case of gadolinium oxide, they can be blocked by 80%. γ-rays of 478 keV that are emitted when neutrons react with boron, which are about 500 keV, can be blocked by about 63% by boron carbide, while in the case of gadolinium oxide, they can be blocked by 98% or more. X-rays of around 100 keV, which are for medical use and are mainly used in X-ray devices, are absorbed by less than 90% by boron carbide, while absorption is larger in the case of gadolinium oxide than in the case of iron, which is 1 to the 42nd power, and the gadolinium oxide has high shielding performance.

Next, there is explained one example of a radiation shield structure. First, a radiation shielding block is prepared. The radiation shielding block is made of concrete, which is the above-described radiation shield. A concrete block, which is the radiation shielding block, is manufactured by the following method, for example. The mixture of the concrete block consists of cement, a gadolinium compound powder serving as a fine aggregate with a size (average particle size) of less than 5 mm, and a gadolinium compound serving as a coarse aggregate with a size (average particle size) of 5 mm or more, with a volume ratio of 1: 2 to 3: 4 to 6 when the cement is 1. First, the cement and the gadolinium compound fine aggregate powder are well mixed, and water is added to the mixture at a ratio of 50 to 60% to the cement to make a cement paste. The water is added a little at a time instead of adding all the water at the beginning, and the amount of water is adjusted according to the state of kneading of the coarse aggregate into the cement paste or the condition where the mixture is put in a mold.

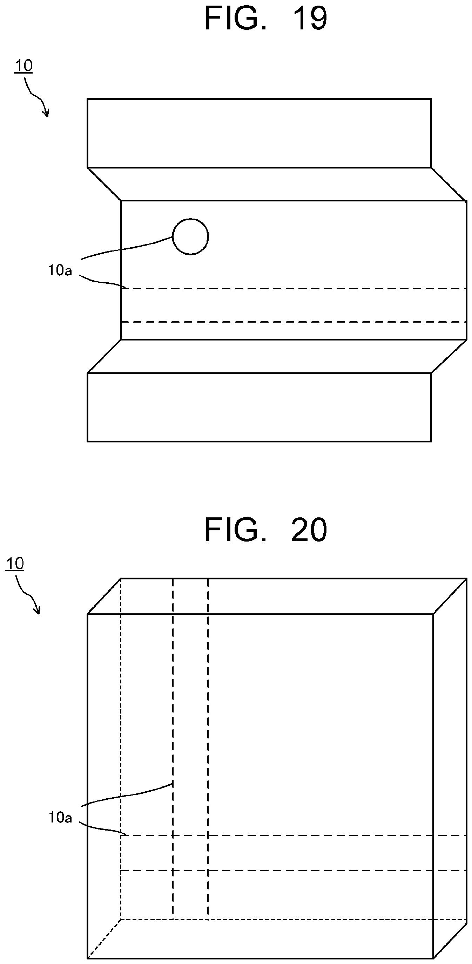

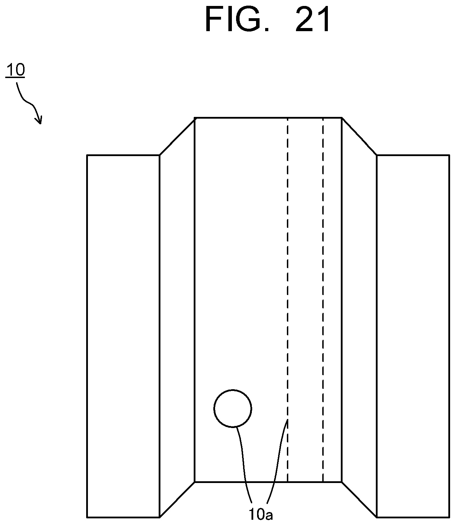

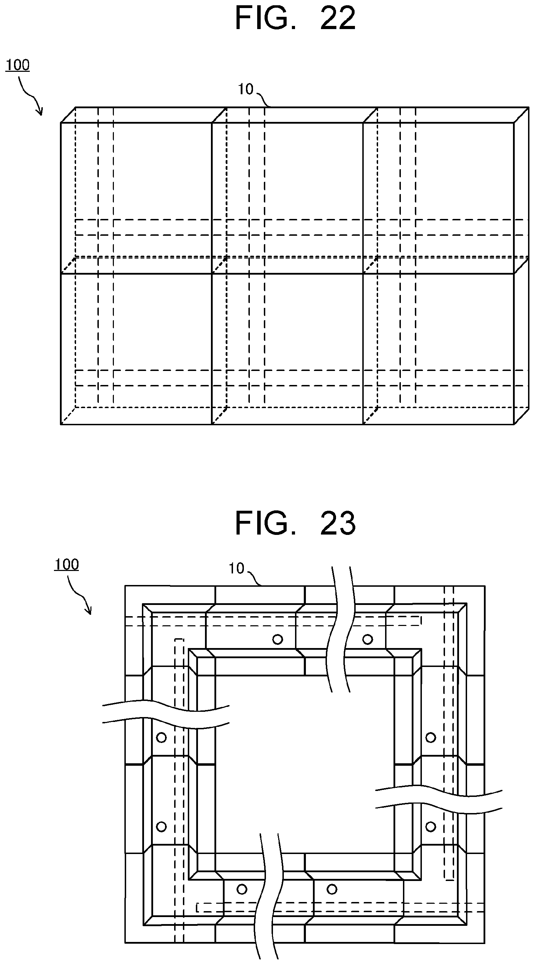

FIG. 19 is a schematic top view illustrating a structure example of a concrete block 10. FIG. 20 is a schematic front view illustrating another structure example of the concrete block 10. FIG. 21 is a schematic side view illustrating another structure example of the concrete block 10. FIG. 22 and FIG. 23 each are a schematic view illustrating a structure example of a concrete block structure being the radiation shield structure. When making a large area or large member, the block is fabricated by using a cement frame. However, the weight of the fabricated block becomes heavy, and thus, the concrete blocks 10 illustrated in either FIG. 19 or FIG. 20 are integrally combined and connected to form a wall-shaped (plate-shaped) concrete block structure 100 illustrated in FIG. 22 or a box-shaped concrete block structure 100 illustrated in FIG. 23. These concrete blocks 10 have connecting through-holes 10a for connecting with other concrete blocks 10.

Unlike general concrete block structures, when the blocks are stacked with flat surfaces thereof overlapping with each other, radiation may leak through the gaps between the flat surfaces. The blocks 10 illustrated in FIG. 19, FIG. 20, and FIG. 21 each have a projecting and recessed structure formed on the overlapping surface, to thereby inhibit radiation leakage from the gaps. Furthermore, assuming that the individual concrete blocks 10 are heavy and may fall down or collapse when stacked on top of each other, the concrete blocks 10 are connected by bolting, or other means, with a structural material such as iron or stainless steel put through the connecting through-holes 10a vertically or horizontally, and in some cases, these bolts are used to fix the blocks to the floor to form anchors. The size of one piece in FIG. 19, FIG. 20, and FIG. 21 is standardized as 50 mm or 100 mm, and further the blocks can be combined in multiple layers to form a shield depending on the shielding effect situation.

The concrete, which is the radiation shield unit in the embodiment, can be used alone, and further can be combined with conventional heavy concrete containing boron or iron to form a radiation shield unit. The radiation shield unit in the embodiment has a high radiation shielding ability, and for example, a shield is formed with the radiation shielding blocks in the embodiment around a radiation generation source, and then conventional heavy concrete blocks are combined behind the shield to form a radiation shield structure, thereby making it possible to more effectively shield against radiations. With such a combination, a margin can be given to the thickness or the like of the entire shield to expand the applicability of the shield to an installation space.

According to the radiation shield unit in this embodiment, it is possible to scatter high-energy neutron rays by the water mixed with the cement, absorb the energy, and reduce the energy to low energy, and in addition to the originally generated radiations, the radiations emitted by reacting with the neutrons can also be efficiently absorbed by the high-density gadolinium compound, which is industrially useful.

## Claims

1. A radiation shield unit configured to shield against neutron rays, X-rays, and γ-rays, the radiation shield unit comprising:
10 vol% or more and 90 vol% or less of gadolinium.

2. The radiation shield unit according to claim 1, further comprising:
a water-insoluble gadolinium compound containing the gadolinium.

3. The radiation shield unit according to claim 2, further comprising:
a powder of the gadolinium compound or a sintered compact of the gadolinium compound, wherein
the powder or the sintered compact has a density of 6.5 g/cm³ or more.

4. The radiation shield unit according to claim 2, wherein
the gadolinium compound contains an activator.

5. The radiation shield unit according to claim 2 or claim 3, wherein
the gadolinium compound contains at least one selected from the group consisting of gadolinium oxide, gadolinium gallium garnet, gadolinium oxysulfide, and gadolinium silicate.

6. The radiation shield unit according to claim 1, further comprising:
a first aggregate having an average particle size of less than 5 mm, an average length of less than 5 mm, or an average thickness of less than 5 mm, the first aggregate containing a first gadolinium compound; and
a second aggregate having an average particle size of 5 mm or more, an average length of 5 mm or more, or an average thickness of 5 mm or more, the second aggregate containing a second gadolinium compound.

7. The radiation shield unit according to claim 6, wherein
each of the first and second gadolinium compounds includes at least one selected from the group consisting of gadolinium oxide, gadolinium gallium garnet, gadolinium oxysulfide, and gadolinium silicate, and
the first and second gadolinium compounds are the same compounds as or different compounds from each other.

8. The radiation shield unit according to any one of claims 1 to 7, further comprising:
at least one selected from the group consisting of tungsten, bismuth, lead, molybdenum, and a heavy alloy.

9. The radiation shield unit according to any one of claims 1 to 8, wherein
the radiation shield unit is concrete.

10. A method of manufacturing a radiation shield unit configured to shield against neutron rays, X-rays, and γ-rays, the method comprising:
mixing cement, a first aggregate, a second aggregate, and water, the first aggregate having an average particle size of less than 5 mm, an average length of less than 5 mm, or an average thickness of less than 5 mm, the first aggregate containing a first gadolinium compound, the second aggregate having an average particle size of 5 mm or more, an average length of 5 mm or more, or an average thickness of 5 mm or more, and the second aggregate containing a second gadolinium compound, wherein
a volume ratio of the fine aggregate to the cement is 2 or more and 3 or less,
a volume ratio of the coarse aggregate to the cement is 4 or more and 6 or less, and
a volume ratio of the water to the cement is 0.5 or more and 0.6 or less.

11. The method according to claim 10, wherein
each of the first and second gadolinium compounds includes at least one selected from the group consisting of gadolinium oxide, gadolinium gallium garnet, gadolinium oxysulfide, and gadolinium silicate, and
the first and second gadolinium compounds are the same compounds as or different compounds from each other.

12. A radiation shield structure, comprising:
radiation shield blocks integrated with each other, wherein
each of the radiation shield blocks includes the radiation shield unit according to any one of claims 1 to 9.

13. A radiation shield structure, comprising:
the radiation shield unit according to any one of claims 1 to 9; and
a second radiation shield unit containing boron or iron.
